# DEMANDE DE BREVET EUROPEEN

(11) **EP 1 008 298 A1**
(43) Date de publication de la demande: **14.06.2000**
(21) Numéro de dépôt: 99403118.5
(22) Date de dépôt: 10.12.1999
(51) Int. Cl.: A01N 63/00

(54) **Procédé de lutte contre la cicadelle de la vigne**

(30) Priorité: 10.12.1998 FR 9815597
(71) Demandeur: Sutre, Bertrand Jean Daniel, 33460 Macau (FR)
(72) Inventeur: Sutre, Bertrand Jean Daniel, 33460 Macau (FR)
(74) Mandataire: Nony, Michel

(57) **Abrégé**

On dispose de manière régulière dans la parcelle de vigne des pupes d'A. atomus à une période qui se situe de la fin de la première génération au début de la deuxième génération de cicadelles adultes, et on répète de préférence cette opération après une période d'environ sept jours.

## Description

La présente invention a pour objet un nouveau procédé écologique pour la lutte biologique contre la cicadelle de la vigne.

On connaît de nombreuses espèces de cicadelles dont le cycle de développement s'effectue en totalité ou en partie sur des végétaux en provoquant des dégâts qui peuvent être graves.

On connaît en particulier trois espèces de cicadelles qui effectuent leur développement complet sur la vigne qui sont *Empoasca vitis (E. vitis)* la *Zygina rhamni* (*Z.rhamni*) et *la Scaphoideus titanus* (*S. titanus*).

La présente invention est relative à un procédé de lutte contre la *E.Vitis* encore connue sous le nom de cicadelle verte ou de cicadelle des grillures.

Ces insectes qui hivernent sous forme adulte principalement sur des arbres ou arbustes à feuilles persistantes ont des femelles qui migrent au printemps pour pondre 15 à 20 oeufs dans les nervures de la face inférieure des feuilles de vigne, pendant une période d'environ 4 à 5 semaines.

L'incubation des oeufs dure de 8 à 10 jours pour donner des larves qui passent successivement par cinq stades larvaires avant de devenir adulte, au cours d'un cycle qui dure une soixantaine de jours.

Trois à quatre générations de *E.vitis* se succèdent en moyenne chaque année.

Les lésions occasionnées par ces piqûres de l'insecte dans la nervure des feuilles au niveau du liber provoquent un dessèchement progressif du limbe de la périphérie vers le centre, ce qui conduit à une destruction progressive du feuillage qui perturbe fortement la maturation des raisins et peut provoquer une perte de degré alcoolique de la récolte.

En fin de saison, le *E.vitis* regagne son habitat hivernal.

La stratégie actuelle de lutte contre ce parasite ravageur vise à maintenir les populations de larves en dessous d'un certain seuil qui est de l'ordre de 50 à 100 larves pour 100 feuilles de vigne.

Pour ce faire, on utilise des insecticides de la famille des organo-phosphorés, des pyréthrinoïdes, des carbamates ou encore des acylurées, produits qui en dehors de leur coût, présentent une toxicité non négligeable tant pour l'environnement que pour leurs utilisateurs.

Il est également connu que diverses espèces de cicadelles parmi lesquelles les *E.vitis* peuvent être victimes de parasitoïdes, c'est-à-dire d'insectes qui viennent pondre leurs oeufs dans les oeufs ou les larves des cicadelles, et dont les larves se développent au détriment des larves de cicadelles, ce qui entraîne la mort de ces dernières.

Parmi de tels parasitoïdes, on connait *l'Anagrus atomus* (*A. atomus*) qui est un hyménoptère de la famille des Mymaridae.

Il s'agit d'un insecte de petite taille qui mesure 0,6 mm à l'état adulte et dont le cycle de développement se déroule en moins d'un mois, les A. atomus adultes ne vivant que quelques jours.

Comme relaté dans le N° 495 de Juin 1997 de La Revue de la Protection des Plantes, des expériences ont été réalisées pour voir si en introduisant des A. atomus dans une parcelle de vigne, il était possible d'empêcher, ou tout au moins de combattre efficacement, le développement des populations larvaires de *E.vitis.*

Les expérimentations relatées dans cet article confirment l'action possible de *l'A. atomus* pour limiter la prolifération des larves de la cicadelle *E.vitis,* mais n'ont pas permis de dégager les caractéristiques d'un procédé permettant l'utilisation de *l'A. atomus* pour la destruction des cicadelles *E.vitis* qui soit à la fois techniquement efficace et d'un coût économiquement acceptable.

La présente invention est relative aux modalités selon lesquelles *l'A. atomus* doit être utilisé pour obtenir une élimination des cicadelles E.vitis ou tout au moins un maintien de sa population à un niveau suffisamment bas pour qu'il ne provoque pas de dégât sensible sur les vignobles.

La présente invention a pour objet un procédé de lutte biologique contre la cicadelle E.vitis qui parasite la vigne, à l'aide *d'Anagrus Atomus,* procédé qui est caractérisé par le fait que l'on dispose de manière régulière dans la parcelle de vigne des pupes d'A. *atomus* à une période qui se situe de la fin de la première génération au début de la deuxième génération de cicadelles adultes, à raison d'au moins 100 pupes par hectare et de préférence d'environ 250 à 500 pupes par hectare, et que l'on dispose une nouvelle série de telles pupes dans la parcelle de vigne au moins une nouvelle fois à des intervalles de temps d'environ sept jours.

Les *A. atomus* utilisés selon l'invention sont avantageusement le résultat d'élevages industriels qui se présentent sous la forme de pupes constituées par exemple par des oeufs de cicadelle de la tomate situés sur des fragments de feuille de tomates, ces oeufs ayant été eux-mêmes infectés par la ponte d'oeufs *d'A. atomus* qui se développent au détriment des larves de cicadelles.

De telles pupes contenant des populations importantes d'A.atomus peuvent être en particulier obtenues auprès de la Société Britannique ENGLISH WOODLANDS BIOCONTROL.

Il est clair que les pupes peuvent être de natures différentes et provenir de différentes espèces de cicadelles à condition que leurs oeufs soient parasités par la ponte des femelles *d'A. atomus*.

Conformément à l'invention, il est avantageux de disposer les pupes dans une petite enceinte en partie close assurant une protection suffisante à l'encontre du soleil de manière à maintenir une humidité relative de la pupe. Pour cela il est avantageux de placer dans chaque enceinte une certaine quantité d'eau ou une substance conservant une humidité ambiante.

Ces enceintes sont de préférence protégées par des moustiquaires dont les mailles sont suffisamment grandes pour permettre le passage des femelles *d'A. atomus* pour qu'elles puissent venir pondre dans les oeufs de cicadelle, mais qui s'opposent au passage d'insectes de taille plus importante.

C'est ainsi que l'on peut par exemple placer dans des petits pots en matière plastique comportant des trous de faible diamètre, les pupes constituées par des feuilles de tomates qui ont été initialement infectées par la cicadelle de la tomate et dont les oeufs et les larves ont été parasitées par les *A.atomus* dont les femelles adultes sont utilisées conformément à l'invention.

Conformément à l'invention la détermination de la période du premier lâcher *d'A. atomus* peut s'effectuer par comptage des cicadelles adultes piégées dans la parcelle de vigne par des pièges chromo-attractifs qui attirent les cicadelles par leur couleur et qui comportent une surface adhésive pour fixer les cicadelles qui s'y posent.

Conformément à l'invention il est préférable de procéder à la première mise en place des pupes d'A.atomus au moment qui correspond à la valeur maximale relevée lors du comptage des cicadelles de la première génération et de faire suivre ce premier lâcher d'un second lâcher environ sept jours après et éventuellement d'un troisième lâcher encore environ sept jours après.

Il a été également observé conformément à l'invention, que le maximum de cicadelles adultes de la première génération s'observe environ dix jours après la première apparition de cicadelles à l'état adulte, ce qui permet aussi de déterminer le moment de la mise en place des premières pupes.

Avantageusement, on procède à la première mise en place des pupes environ 10 jours après la première apparition de cicadelles à l'état adulte.

La densité des pupes à placer dans la parcelle de vigne dépend de différents facteurs tels que l'importance de la population de cicadelles à détruire, la densité d'implantation de la vigne à l'hectare, les conditions climatiques, notamment l'importance des vents qui favorisent le déplacement des femelles d'A. *atomus* pour leur permettre de parcourir la distance séparant la pupe dont elles sont issues des oeufs de cicadelle qu'elles doivent parasiter.

On sait, en effet, qu'alors que les cicadelles sont des insectes volants de taille suffisante pour être facilement déplacées par un vent même faible, les *A. atomus* sont des insectes de très faible dimension qui sont peu sensibles au vent et qui en raison de leur faible durée de vie ne peuvent pas se déplacer sur des distances importantes.

Les essais effectués au cours de l'année 1998 ont montré que des densités de 250 pupes à l'hectare ont permis, conformément à l'invention, d'obtenir des résultats très satisfaisants, même dans les parcelles de vigne comportant des colonies importantes de cicadelles allant jusqu'à 250 larves de cicadelles pour 100 feuilles de vigne, ce qui montre l'efficacité du procédé selon l'invention.

## Revendications

1. Procédé de lutte biologique contre la cicadelle *E.vitis* qui parasite la vigne, à l'aide *d'Anagrus atomus,* caractérisé par le fait que l'on dispose de manière régulière dans la parcelle de vigne des pupes d'A. *atomus* à une période qui se situe de la fin de la première génération au début de la deuxième génération de cicadelles adultes, à raison d'au moins environ 100 pupes par hectare et de préférence d'environ 250 à 500 pupes par hectare, et que l'on dispose une nouvelle série de telles pupes dans la parcelle de vigne au moins une nouvelle fois à des intervalles de temps d'environ sept jours.

2. Procédé selon revendication précédente, caractérisé par le fait que l'on utilise des pupes constituées par des oeufs de cicadelles de la tomate situés sur des fragments de feuille de tomate, ces oeufs de cicadelles ayant été eux-mêmes infectés par la ponte d'oeufs *d'Anagrus atomus* qui se développent au détriment des larves de cicadelles.

3. Procédé selon l'une quelconque des revendications précédentes, caractérisé par le fait que l'on place les pupes dans une petite enceinte en partie close, assurant une protection suffisante à l'encontre du soleil, de manière à maintenir une humidité relative de la pupe.

4. Procédé selon la revendication 3, caractérisé par le fait que l'on place dans l'enceinte de l'eau ou une substance conservant une humidité ambiante.

5. Procédé selon la revendication 3 ou 4, caractérisé par le fait que l'on place les pupes dans des petits pots en matière plastique comportant des trous de faible diamètre.

6. Procédé selon l'une quelconque des revendications 3 à 5, caractérisé par le fait que l'on entoure l'enceinte contenant les pupes par une moustiquaire dont les mailles sont suffisantes pour laisser passer les femelles *d'A. atomus*.

7. Procédé selon l'une quelconque des revendications précédentes, caractérisé par le fait que l'on détermine la période du premier lâcher *d'Anagrus atomus* en procédant au comptage des cicadelles adultes piégées dans la parcelle de vigne par des pièges chromo-attractifs qui attirent les cicadelles par leur couleur et qui comportent une surface adhésive pour fixer les cicadelles qui s'y posent.

8. Procédé selon la revendication 7, caractérisé par le fait que l'on procède à la première mise en place des pupes d'A. atomus au moment qui correspond à la valeur maximale relevée lors du comptage des cicadelles de la première génération.

9. Procédé selon l'une quelconque des revendications 1 à 8, caractérisé par le fait que l'on procède à la première mise en place des pupes environ 10 jours après la première apparition de cicadelles à l'état adulte.
